# EUROPEAN PATENT APPLICATION

(11) **EP 0 893 760 A2**
(43) Date of publication of application: **27.01.1999**
(21) Application number: 98305688.8
(22) Date of filing: 16.07.1998
(51) Int. Cl.: G06F 9/46, G06F 17/30, H04L 29/06

(54) **Context-sensitive document transactions**

(30) Priority: 21.07.1997 GB 9715257
(71) Applicant: XEROX CORPORATION, Rochester, New York 14644 (US)
(72) Inventor: Eldridge, Marge, Gt. Shelford, Cambridge CB2 5AH (GB); Flynn, Michael, Cambridge CB2 2RN (GB); Jones, Chris, Cambridge CB1 2LG (GB); Kleyn, Michiel, Blackheath, London SE3 (GB); Lamming, Michael, Cambridge CB2 2RN (GB); Pendlebury, David, Cambridge CB1 2LG (GB)
(74) Representative: Reynolds, Julian David

(57) **Abstract**

A system including any number workstations, file servers, printers and other fixed devices coupled in a network, and a number of portable devices carried by users and coupled to the network by infrared (IR) link. Each portable device emulates its user's personal satchel for documents: the device is programmed to receive transmit and store tokens. The tokens include context information (indicating the identity of a nearby device and the services ― such as send/receive, scanning, printing, faxing, converting ― that are available a that device) are distributed from one person to another by transmission of IR data packets. Once a network-connected computer, printer or multifunction device has received a token via IR transceiver associated with it, a search request can be derived from the token and document references (e.g. WWW URLs) corresponding to the token can be obtained via a search engine. For each URL obtained, the corresponding electronic document can be retrieved from a repository and displayed or printed. The portable device is preferably a handheld or wristwatch computer with a graphical display for enabling the user to transfer tokens, and the fixed devices preferably include a scanner/copier/printer having its own IR transceiver.

## Description

The present invention relates to data processing, and more particularly relates to the transfer between computing devices, and the retrieval by such devices, of document related information. Even more particularly, the invention concerns such information retrieval and transfer based on location or context.

While the use of portable computing devices is becoming more widespread, it is as yet not possible to store in such devices the electronic files for all the documents that a user may wish to have access to (e.g. due to storage capacity limitations), and the transfer of bulk documents between such devices, or between one such device and a desktop office or home computer may be time consuming or otherwise user unfriendly. At the same time, there is growth in the provision of electronic document repositories and expanding use of document transfer via the internet.

This situation is addressed in EP-A-691,619 (hereafter "EP'619"), which discloses a system including any number workstations, file servers, printers and other fixed devices (including multifunction devices) coupled in a network, and a number of portable devices (e.g. handheld or wristwatch computer) carried by users and coupled to the network by infrared (IR) link. Each portable device emulates its user's personal satchel for documents: the device is programmed to receive transmit and store document references (World Wide Web URLs), each of which is associated with an electronic document stored in an electronic repository at a site on the web. Documents are distributed from one person to another by transmission of document URLs, and a document is sent to a printer by beaming that document's URL to an IR transceiver associated with that printer.

Mobile workers away from their offices can make use of such a system in order to initiate activities which deal with electronic and paper documents. These activities include printing, scanning, viewing, presenting, requesting, giving, and distributing documents, and accessing document services. When using such a system there is a need to interact in a quick and streamlined way.

In the abovementioned system, a mobile worker can carry around a portable device in order access documents, document devices and document services. The user interaction needed to perform document related tasks can be complex, in the same way that it can complex be for a user wishing to perform the same task sitting at a workstation. This interaction could involve searching through menus, identifying relevant devices, appropriate services for a device, and what names are used to identify them within the local network. When transferring an electronic document from one user to another it might involve finding some system identifier (e.g. an email address) to complete the task. These interactions are especially difficult when away from the worker's familiar home office environment. It may need finding people who can tell the worker what the devices are named.

It would be desirable to have a system which enabled a user to interact in carrying out document-related operations, in a quick and streamlined manner.

The present invention provides a method carried out in a data processing device including a processor, memory, a user interface and means providing two way wireless communication with one or more other devices, including a target device, comprising: (a) in response to a first user input defining a context request, transmitting a query, the query requesting which service(s) can be performed by the target device, (b) receiving a response from the target device, the response incorporating a target device identifier identifying the target device, and at least one component comprising a service identifier identifying the service requested in step (a), (c) determining whether the response received in step (b) is positive, (d) if the response is positive, assembling a token from a plurality of token components, each token component defining a document related entity and a property of the entity, at least one component comprising the target device identifier, and at least one component comprising the service identifier.

The data processing device may comprise a portable computing device, and step (a) may comprise receiving user inputs via touchscreen or a keyboard.

The present invention further provides a method carried out in a data processing device including a processor, memory, and a user interface, comprising: (d) receiving a first user input designating a graphical object corresponding to a document, the document being associated with a stored token, the token having a plurality of token components, each token component defining a document related entity and a property of the entity, at least one component comprising a target device identifier identifying the target device, and at least one component comprising a service identifier identifying a service selected by the user, (e) receiving a second user input indicating that the token is to be sent to another data processing device, (f) encoding the token in a data packet, and (g) transmitting the data packet.

The present invention provides a method carried out in a data processing device including a processor, memory, and a user interface, comprising: (h) receiving a data packet, (i) decoding the data packet to derive a token, the token from a plurality of token components, each token component defining a document related entity and a property of the entity, at least one component comprising a target device identifier identifying the target device, and at least one component comprising a service identifier identifying a service, (j) storing the token derived in step (i).

The present invention provides a method carried out in a data processing device including a processor, memory, and a user interface and means providing two-way wireless communications with one or more portable devices, the data processing device being couple in a network to one or more other data processing devices, at least one of the data processing devices including means for storing a repository of electronic documents, comprising: (h) receiving a data packet, (i) decoding the data packet to derive a token, the token having a plurality of token components, each token component defining a document related entity and a property of the entity, at least one token component comprising a request for a document related service, (j) assembling a service token from token derived in step (i), at least one component comprising a target device identifier identifying the target device, and at least one component comprising a service identifier identifying a service, said target device identifier and said service identifier being dependent upon the location of said data processing device, (k) sending the service token to one of said other data processing devices via the network.

The present invention provides a method carried out in a data processing device including a processor, memory, and a user interface and means providing two-way wireless communications with one or more portable devices, the data processing device being couple in a network to one or more other data processing devices, at least one of the data processing devices including means for storing a repository of electronic documents, comprising: (h) receiving a data packet, (i) decoding the data packet to derive a token, the token having a plurality of token components, each token component defining a document related entity and a property of the entity, at least one token component comprising a request for a document related service, and at least one component comprising a target device identifier identifying the target device, and at least one component comprising a service identifier identifying a service, said target device identifier and said service identifier being dependent upon the location of said data processing device, (j) assembling a service token from token derived in step (i), (k) sending the service token to one of said other data processing devices via the network.

The present invention provides a method carried out in a data processing device including a processor, memory, and a user interface the data processing device being couple in a network to one or more other data processing devices, at least one of the data processing devices including means for storing a repository of electronic documents, comprising: (k) receiving a service token, the token from a plurality of token components, each token component defining a document related entity and a property of the entity, at least one component comprising a target device identifier identifying the target device, and at least one component comprising a service identifier identifying the service requested by the user, (I) decoding the token to determine therefrom one or more document references, the or each document reference corresponding to a document within said repository and specified by one of said token components, and (m) sending a request to said one of the data processing devices storing the repository of documents, for retrieval of the or each document corresponding to the or each document reference.

The method may further comprise the step of: (m) displaying the or each document reference determined in step (I).

The method may further comprise the step of: (n) in response to a second user input designating one of the displayed document references, retrieving the document corresponding to said document reference from said repository and, optionally, displaying said document or a portion thereof.

The method may further comprise the step of: (o) in response to a third user input, causing the document corresponding to said document reference to be printed.

The data processing device may alternatively comprise a fixed computing device, and step (a) may comprise receiving user inputs via touchscreen, a keyboard, and/or mouse.

The present invention provides a data processing device when suitably programmed for carrying out the method of any of the preceding claims, the device comprising a processor, a memory, and a user interface.

The present invention provides a data processing device comprising: a processor, a memory coupled to the processor, and a user interface coupled to the processor and to the memory and adapted to be operable by a user to generate user inputs, means providing two-way wireless communications between the device and one or more other devices, including means for receiving at least one user input, the user input(s) defining a token, the token comprising a plurality of token components, each token component defining a document related entity and a property of the entity, at least one component comprising a target device identifier identifying the target device, and at least one component comprising a service identifier identifying the service requested by the user.

The present invention provides a system for accessing or distributing electronic documents, including: a repository of electronic documents, each document having a corresponding document reference, and a plurality of objects, at least one of said objects being portable or mobile, each object including means for communicating with the or each other object and with a user interface, and means for receiving, storing and/or transmitting a token, the token comprising a plurality of token components, each token component defining a document related entity and a property of the entity, at least one component comprising a target device identifier identifying the target device, and at least one component comprising a service identifier identifying the service requested by the user.

The present invention provides a portable device for accessing or distributing electronic documents, including: means for communicating with fixed or mobile electronic devices and with a user interface, at least one of said devices including means storing a repository of electronic documents, each document having a corresponding document reference, and means for receiving, storing and/or transmitting a token, the token comprising a plurality oftoken components, each token component defining a document related entity and a property of the entity, at least one component comprising a target device identifier identifying the target device, and at least one component comprising a service identifier identifying the service requested by the user.

The present invention provides an apparatus for scanning, copying and/or printing documents, including: means for accessing a repository of electronic documents, each electronic document having a corresponding document reference, means for communicating with one or more of a plurality of objects, at least one of said objects being portable or mobile, and with a user interface, and means for receiving, storing and/or transmitting a token, the token comprising a plurality of token components, each token component defining a document related entity and a property of the entity, at least one component comprising a target device identifier identifying the target device, and at least one component comprising a service identifier identifying the service requested by the user.

According to the present a portable device which is used to contain the user's documents can be made to be sensitive to the context in which it finds itself (and the user). This can be achieved through various wireless technologies which can be used to deduce the physical context within which the user finds him/herself, and the co-presence of a document device or another user with a portable devices.

Context sensitivity can be achieved, for example, through the limited range and line-of-sight properties of infrared communications technology. These properties mean that a one-to-one communication channel from a portable device to another device (such as a printer with an IrDA transceiver) can only be created by aiming the former at the latter. An instructional message from the portable device to the local network system (i.e. a server software installed on the local network which can initiate actions on the device's behalf) can include the identity of, for example, the printer device that the infrared beam was aimed at. This identity information can be captured by any suitable protocol, including:
(i) the portable device receives the identity from the IR device on the printer and then the portable device issues a message to the server on the local network system which contains this identity. The message contains amongst other parameters, the identity of the printer;
(ii) the portable device issues a message to the printer over infrared and the printer appends its identity as a parameter to the message before forwarding the message on to the server on the local network system.

(Note the specific protocol is transparent to the user, who only notes that an action appropriate for the co-present devices occurs.)

This location context sensitivity also works between users of portable devices - the "beam document to other user's device" can be deduced to be the appropriate action ― "Do it" action. Depending on the device, additional context can be brought to bear to simplify interaction. For example, when scanning a document: as with the printing action, the scanning action can be automatically deduced from the context of the co-presence of the scanning device. When scanning, a name is also needed for the new scanned document. Instead of requiring the user to type in such a name, some location context (e.g. the name of the department, the company, or the site) could be included when automatically creating a default name for the new file. Such a name has the additional benefit of being useable by a system for retrieving information through past logged contexts, such as the system described in EP-A-637,807.

Location context sensitivity can work with many wireless technologies, but some provide more specific location information than others: a wireless LAN system inside a building can indicate which base station is being used. A cellular phone (e.g. GSM) can indicate which cell the user is in. An infrared active-badge system can indicate which room a user is in. GPS can provide a Longitude/Latitude location to 100 metres or less.

The aforementioned problems are overcome by using sensing and exploiting information about the location context within which the portable device finds itself. This location context includes of the co-presence of other devices. These can be other users' portable devices and document devices that can identify themselves. In exploiting this context information, it is possible to make the interaction for initiating a user's intended actions (giving, printing, scanning, displaying, etc.) very simple - sometimes as simple as a single button press. For example, a single button is provided in the user interface of the portable device of the currently implemented embodiment. It is labelled "Do it" and when it is selected it initiates different actions depending on location context.

Simple interaction is invaluable when needing to use an unfamiliar document device quickly, as is often the case for mobile workers in a hurry and away from their familiar home office environment. An advantage of the invention is apparent from a consideration of an example. A mobile worker might be at another site of her company on the way to a meeting. Seeing a printer near the meeting room, she realises that she could print out a document for discussion at the meeting. A single "Do it" button press on the portable device is sufficient, thanks to context sensitivity, to print the document. The particular action initiated through the portable device (printing, in this case) was inferred automatically because of the co-presence of the printer and the user's portable device. The ability to have a simple interaction is the key benefit of location context sensitivity.

A further benefit is that the Location Context Sensitivity techniques according to the invention can allow interaction for document activities from a portable device to simplified by skipping selection interactions which can be deduced from the context. The invention has the ability to exploit context sensitivity to assist users with portable devices with their document activities, and the ability to facilitate users of portable devices to access documents and other services available in the local environment.

Embodiments of the invention will now be described, by way of example, with reference to the accompanying drawings, in which:
Figure 1 illustrates schematically a portion of the network infrastructure which may be used to implement embodiments of the invention;
Figure 2 shows a portable computing device used in accordance with an embodiment of the invention;
Figure 3 illustrates schematically user interface views displayed by the device of Fig. 2 when it is at various ones of the locations in Fig. 1, in accordance with an embodiment of the invention;
Figure 4 is a schematic diagram of the steps involved in the transfer, in accordance with an embodiment of the invention, of a token between a portable computing device and one or more fixed devices;
Figure 5 is a schematic diagram of the steps involved in the transfer, in accordance with an alternative embodiment of the invention, of a token between a portable computing device and one or more fixed devices;
Figure 6 is a schematic flow chart of the steps in exchanging tokens in accordance with an embodiment of the invention; and
Figure 7 is a schematic flow chart of the steps involved in carrying out the appropriate action as specified in the token as received as in Fig. 4.

### 1. System hardware

It will be appreciated that the present invention may be implemented using conventional computer network technology, either using a local area network (LAN) or, more suitably, a wide area network (WAN). The invention has been implemented using conventional web browser software (e.g. Netscape) providing cross-plafform communication and document transfer over the internet. However, it will be appreciated that the invention may be implemented using different system configurations: see EP'619. It will be appreciated that each fixed machine forming part of the network may be a PC running Windows™, a Mac running MacOS, or a minicomputer running UNIX, which are well known in the art, or any suitable processor-controlled network computer. For example, the PC hardware configuration is discussed in detail in *The Art of Electronics,* 2nd Edn, Ch. 10, P. Horowitz and W. Hill, Cambridge University Press, 1989.

As is known, upon request of a user at a first machine, a document stored on a second machine may be retrieved and sent from the second machine over the internet, via any number of intermediate machines to the first machine. Also, the document may be retrieved using as a unique identifier its World Wide Web URL, as discussed in EP'619 and international patent application WO-A- , based on British patent application 9708175.6 (agent's ref. R/97005/JDR). Preferably also connected to the network are any number of processor-controlled printers, scanners, fax machines or multifunction devices (capable of scanning, printing, copying and/or faxing, etc.) (not shown), as discussed in EP'619. Multifunction devices are discussed in more detail in EP-A-741,487. (Equally, other networked machines could be used, providing "non-document" applications; for example Automatic Teller Machines, and home appliances having appropriate communications facilities.) Each machine coupled to the network is also equipped with appropriate hardware and software, which is known in the art, for communication with portable computing devices, such as personal digital assistants (PDAs), handheld PCs, or pocket or wristwatch computers.

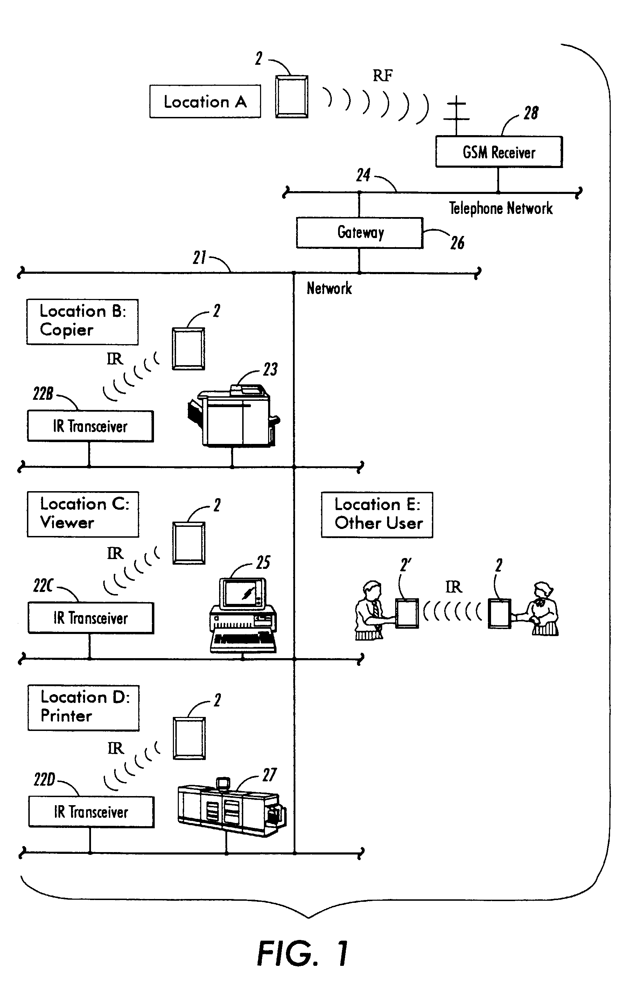

A variant of the infrastructure described in the aforementioned patent applications, for implementing the present invention, is shown in Fig. 1. The pervasive computer network 21 has, as is known, an infrared transceiver 22 for each room, desk, workstation, copier, printer etc., coupled thereto. (For the sake of clarity, only one transceiver 22 is illustrated). In addition, however, the network 21 is coupled to the conventional telephone network 24 by means of gateway 26, which is known in the art. In this way, the portable computing device 2 is able to communicate with devices on the network 21 not only by IR signals to/from transceivers 22, but also (when additionally or alternatively provided with digital radio frequency communications hardware (not shown)) by RF signals to/from a digital cellular base station 28 of the telephone network 24. Suitably, the RF communications hardware (not shown) complies with the GSM digital standard, thereby permitting transmission of digital data between the portable device 2 and the base station 28, which suitably comprises a GSM receiver/transmitter.

In Fig. 1, the physical co-location of the infra-red transceivers with the document devices is illustrated. This is a key aspect of the invention, since the infra-red transceivers 22B, 22C, 22D supply the pieces of location context information which allow a request made by a user to be made context-sensitive. The various locations illustrated are: (1) Location A - example of RF/cellular context - PDA 2 is in digital (GSM) rf communication with GSM transceiver 28, (2) Location B - example of a scanner/copier context - the PDA 2 is in the vicinity of a copier machine 23, (3) Location C - example of a Display Device/Computer Screen context - the PDA 2 is in the vicinity of a workstation (viewer) 25, (4) Location D - example of a Printer context - the PDA 2 is in the vicinity of a network printer 27, (5) Location E - example of an other PDA user context - the PDA 2 is in the vicinity of a PDA 2' of another user. It will be appreciated that the locations A-E may be different parts of the same room or building, different rooms in the same or different building, rooms in building in different countries, or any other geographical distribution.

In the case of the collocation of one or more other PDAs 2, 2' (Location E), the context information is that of other users being present and being able to receive beamed tokens. In the case of RF/cellular communication (Location A) the some context could provided: which cell the call was made from and which phone number was called - a call to a corporate dial-in line would provide context to suggest services available from within the corporation.

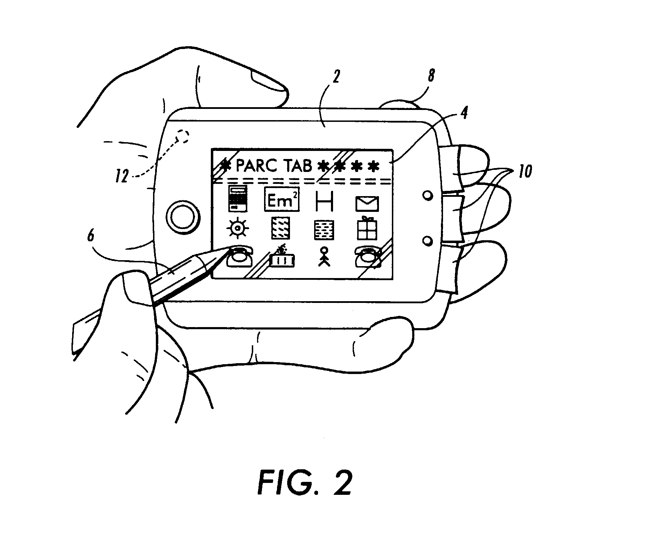

A preferred form of portable computing device is shown in Fig. 2. This device 2 is discussed in more detail in EP'619. However, it will be appreciated that the computing device may be fabricated in a multitude of forms: for example, the device 2 may be of any of the forms disclosed in European patent application EP-A- (corresponding to application No. 97 301 669.4). In its preferred form, each portable computing device 2, and each of the fixed machines on the network, is equipped for infrared communication and, suitably, the data packets transmitted between the computing device 2 and the fixed machines, and enabling the document(s) to be retrieved, conform to the physical and link layer formats (IrLAP) described in the industry standard Infrared Data Association (IrDA) specification, version 1.0, which is well known in the art.

The portable device 2 suitably incorporates, to enable scrolling through and selection of, one or more documents, other users, machines as listed above, or any other document-related options in a list displayed by the user interface display of the device 2, the software for providing one-button searching of long lists, as described in EP-A- (agent's ref.: D/96330/JDR), corresponding to US application S.N. 08/665,068, filed 11 June 1996.

The tokens concept forming a part of the invention provides a component of a system solution that addresses these needs of the mobile worker (e.g. EP '619), within technological constraints. A token contains the small amount of essential information which allows the system (token-capable server software resident on public networks and private networks) to initiate actions which produce the desired result. For example, printing out a document only needs a simple interaction: the document's token is selected on the user interface of the small device. This token is incorporated as a parameter of a token identifying the print service. When the latter token is received by the server software via a wireless and then a wired connection (e.g. an infrared receiver which is tethered to the local network), the servers acts on the receipt of the token and causes the document to be retrieved, processed, and printed. In this way it is only the token that is transmitted from the personal portable device via wireless means and then it is fixed, wired, communications that is then used to move the actual document data, appropriately processed, to the end device (a printer in this example). The net effect is that a user can produce a desired action in a quick and simple way. Further specific details of the token components and their use are set out in EP-A- , based on British patent application 9715256.5 (agent's ref. R/97012) (hereafter "GB'97012"), filed concurrently herewith.

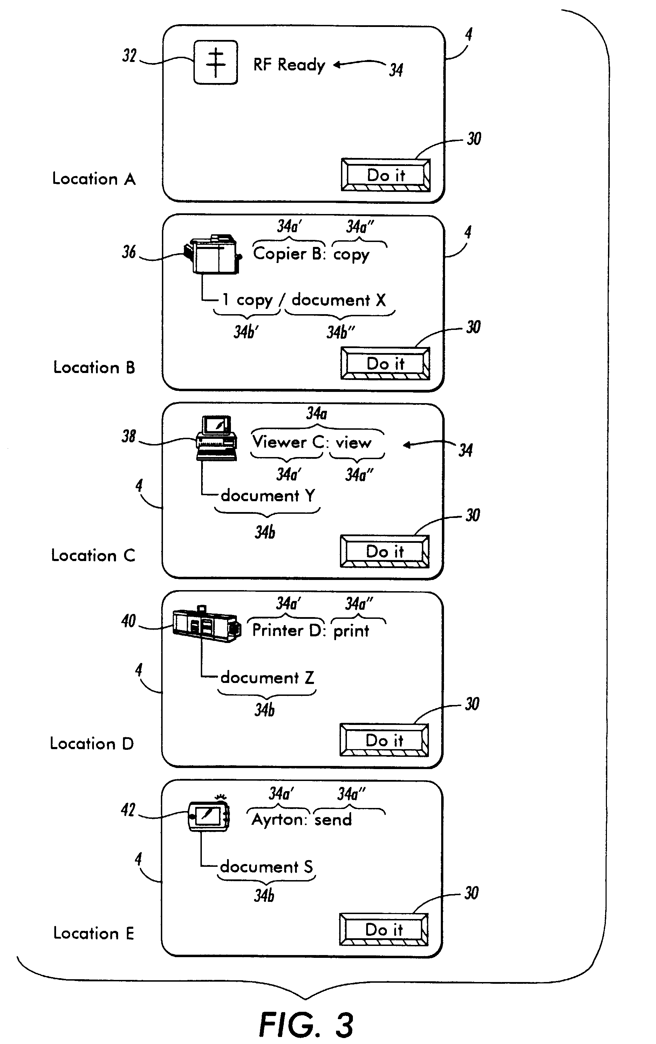

Figure 3 illustrates schematically user interface views displayed by the device of Fig. 2 when it is at various ones of the locations in Fig. 1, in accordance with an embodiment of the invention. In each of the views a button 30 is presented on the touchscreen 4, which the user operates by pressing a penpoint or finger at that location. However, it will be appreciated that instead of the virtual button 30, the relevant user input(s) may be entered by a conventional hardware button, with the virtual button omitted from the display.

At location A, the context information is received by the PDA 2 and there is displayed on screen 4 a icon 32 and a message 34. The message indicates that the PDA 2 is connected for RF communication. If the user want to make use of this rf link, he just presses the "Do it" button 30. Pressing "Do it" returns a list of "Site Services" - i.e. the services available at a particular (corporate) site. The site was deduced from the matching it with the context of the ID of the cell the user's cellphone is in.

At location B, the user is in the vicinity of a copier 23, and a corresponding icon 36 is displayed based on the parameters received by PDA 2 from the an IR transceiver associated with the copier 23 (publicly known as "Copier B"). Again a message 34 is displayed to the user, and in this case the first part 34a of the message has two components ― a first service component 34a' indicating the name of the adjacent machine, and a second service component 34a" indicating the service (copying) available from the machine. In addition the second part 34b of the message has two components ― a first document component 34b' indicating a number of copies, and a second document component 34b" indicating the document name. It will be appreciated that many other items of information could be additionally or alternatively provided as the first document component 34b'. In this case, the proposed action is to make one copy of document X at copier B. If the user is happy to proceed with this proposed action, he just presses the "Do it" button 30: the appropriate token is formed and sent to the machine 23 (as described elsewhere), and the action is then invoked.

At location C, the user is in the vicinity of a workstation (viewer) 25, and a corresponding icon 38 is displayed based on the parameters received by PDA 2 from the an IR transceiver associated with the viewer 25 (publicly known as "Viewer C"). Again a message 34 is displayed to the user, the first part 34a of the message having two components ― a first service component 34a' indicating the name of the adjacent workstation 25, and a second service component 34a" indicating the service (viewing) available from that machine. Here, the second part 34b of the message has a single component ― a document component indicating the document name. In this case, the proposed action is to view a copy of document Y at viewer C. If the user is happy to proceed with this proposed action, he just presses the "Do it" button 30: the appropriate token is formed and sent to the machine 25 (as described elsewhere), and the action is then invoked.

At location D, the user is in the vicinity of a printer 27, and a corresponding icon 38 is displayed based on the parameters received by PDA 2 from the an IR transceiver associated with the printer 27 (publicly known as "Printer D"). Again a message 34 is displayed to the user, the first part 34a of the message having two components ― a first service component 34a' indicating the name of the adjacent printer 27, and a second service component 34a" indicating the service (printing) available from that machine. Here, the second part 34b of the message has a single component ― a document component indicating the name of the document proposed to be printed. In this case, the proposed action is to print a copy of document Z at printer D. If the user is happy to proceed with this proposed action, he just presses the "Do it" button 30: the appropriate token is formed and sent to the machine 27 (as described elsewhere), and the action is then invoked.

At location E, the user (with PDA 2) is in the vicinity of a the PDA 2' of another user, and a corresponding icon 42 is displayed based on the parameters received by PDA 2 from the an IR transceiver of PDA 2' (publicly known as "Ayrton"). Again a message 34 is displayed to the user, the first part 34a of the message having two components ― a first service component 34a' indicating the name of the owner of adjacent PDA 2', and a second service component 34a" indicating the service (sending to PDA 2') available from that machine. Here, the second part 34b of the message has a single component ― a document component indicating the name of the document proposed to be sent. In this case, the proposed action is to send a copy of document S to PDA 2'. If the user is happy to proceed with this proposed action, he just presses the "Do it" button 30: the appropriate token is formed and sent to the PDA 2' (as described elsewhere), and the action is then invoked.

### 2. Context-based transactions with tokens

### 2.1 PDA → fixed device: method 1

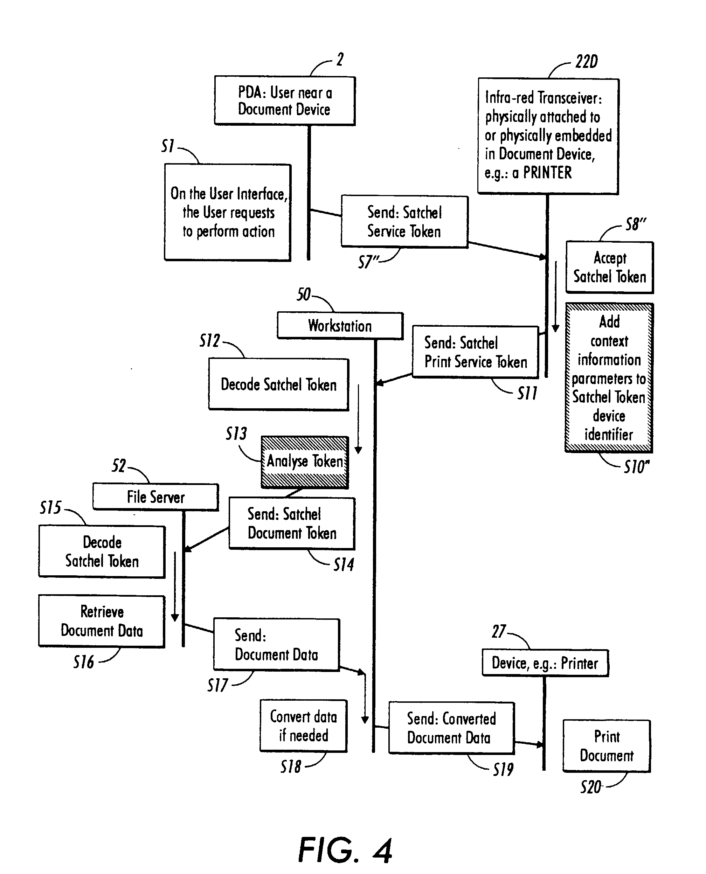

Figure 4 is a schematic diagram of the steps involved in the transfer, in accordance with an embodiment of the invention, of a token between a portable computing device (PDA 2) and an exemplary fixed device via an IR transceiver 22D (the transceiver 22 may by physically attached to (and electronically coupled to) or embedded in, the printer on which it intended to print the document). Here, the token is a (print) service token, and the fixed device is a printer 27 on which the user wishes to accomplish the printing of a document.

Initially (step s1) an input is received from the user of PDA 2, who is in the vicinity of printer 27, requesting the transmission of a token. This request may be input by the user via the user interface of the PDA 2 by means of button presses, selection from pull down menus, and/or dragging and dropping of icons, as is well known in the art (see, e.g. EP'619).

In response to the user request, in PDA 2 the components (see Fig. 3 of GB'97012) are assembled and the token (30, 40 in that Fig. 3) constructed. This is followed by the wireless transmission of the token (i.e. as an IR data packet) (step s7") from PDA 2 to transceiver 22D. Once received at transceiver 22D, the newly-arrived token is accepted (step s8") at transceiver 22D, and temporarily stored in the conventional manner without further intervention by the user.

In Fig. 4, step s8' is followed by the step (s10") of adding parameters to the received satchel print service) token: these may include any of the (components of the) parameters 38,48 of Fig. 3 in GB'97012. In this case, context information parameters 386 are added to the satchel token; i.e. the received token had a component (context information parameters 386) which was empty, and that component is now filled with an identifier of printer 27 (including, e.g. type of device, and public name). In addition, in step s10" the Service Host Identifier component 32 may be filled at the same time, i.e. with the identifier (e.g. internet FQ Domain Name) of a host machine on the network (in this case workstation 50, as discussed below) which oversees the processing of the token. Once the parameters have been appended to the token, the token (completed Satchel Print Service Token) is sent over the network to workstation 50.

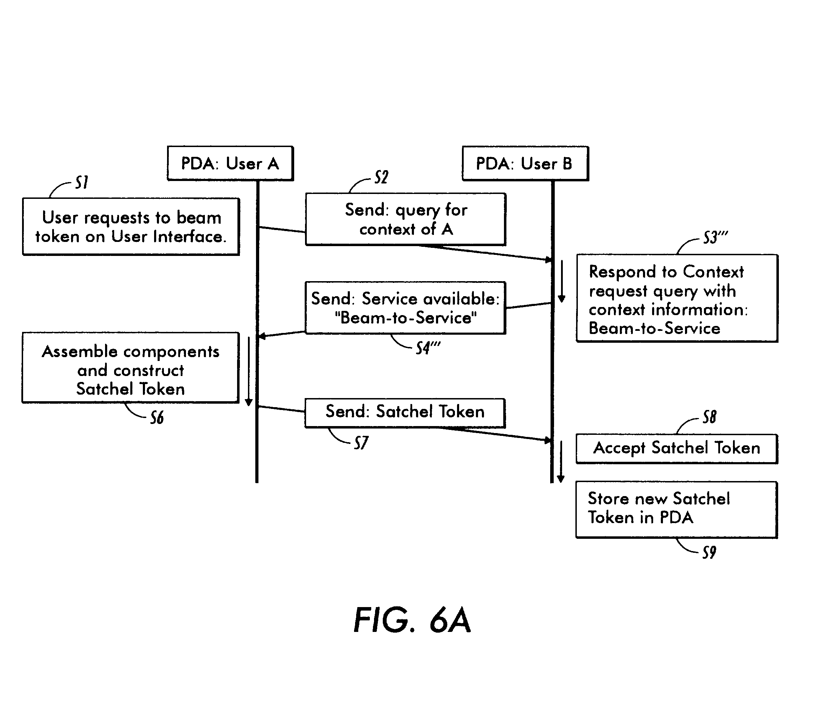

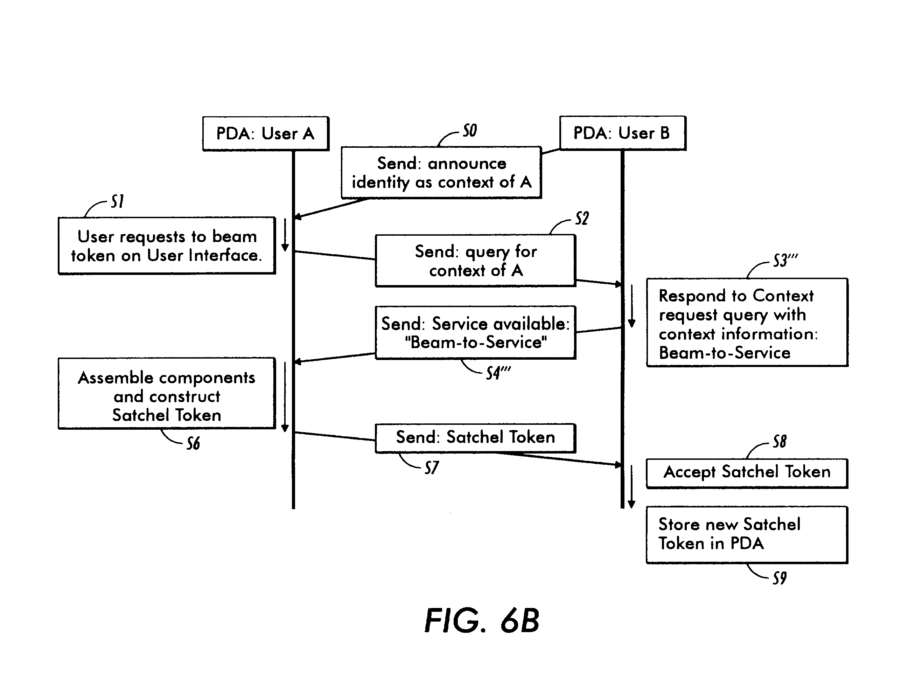

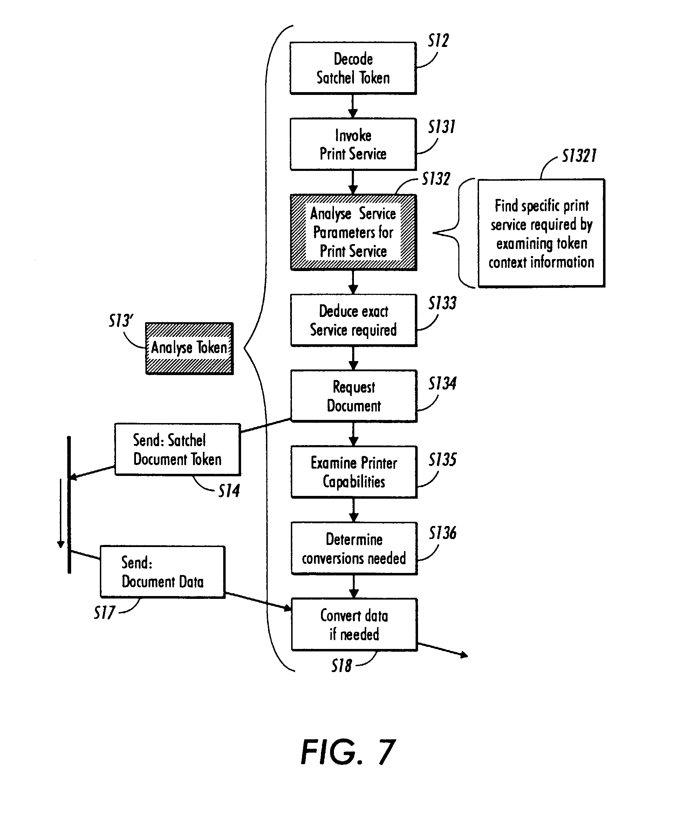

At workstation 50, upon receiving the token, the first step (s11) is to decode the token: this involves checking the Authorisation (see Fig. 3 of GB'97012), and is described in more detail in connection with Fig. 6 of GB'97012. Then, the token is analysed at step s13: the substeps constituting the procedure of step s13 are described in more detail below with reference to Fig. 7. An element of this routine is the request for a document held in an electronic repository - here it is illustrated as being stored on a remote file server 52 (which may be in a different building or in a different country), although it will be appreciated that the document could be stored locally on the workstation 50.

Thus, in order to request the document the document token is sent (step s14) to file server 52 where it is decoded (step s15) upon receipt, so as to extract the Document Identifier 46 (see Fig. 3(b)), e.g. a WWW URL. Using the Document Identifier 46, the document data (electronic file) are retrieved by the file server 52. The document data are then sent over the network at step s17, in the conventional manner, to the workstation 50 which originally received the Print Service token.

Once the document data are received at the workstation 50, a check is made to see whether the data must be converted (to a different format), and if so, the conversion is carried out at step s18. For example, printer 54 associated with transceiver 22 may be capable of printing only in PostScript® format; and step s10 therefore included adding parameters to the token designating that the data file sent ultimately to the printer must be converted to PostScript® format. Following conversion (if necessary), the (converted) document data are sent (step s19) to the printer 54. Upon receiving the document data, the document is printed (s20) by the printer in the conventional manner.

### 2.1 PDA → fixed device: method 2

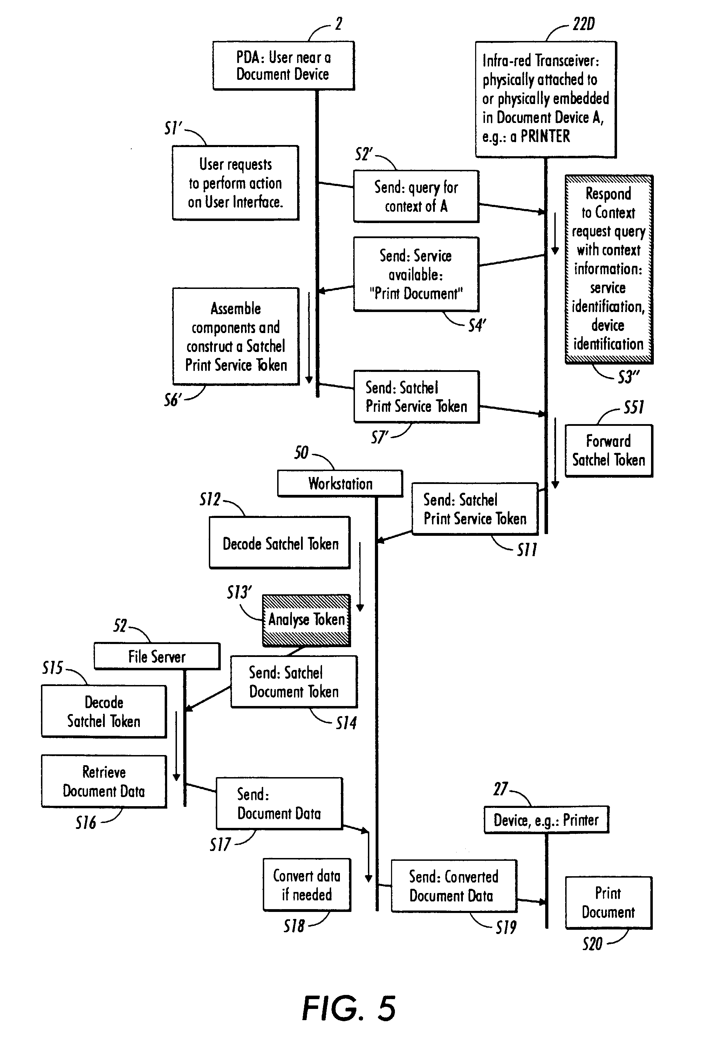

Figure 5 is a schematic diagram of the steps involved in the transfer, in accordance with an embodiment of the invention of a (print service) token between a portable computing device (PDA) and a fixed device (printer) in order to accomplish the printing of a document.

This process is the same as that described with reference to Fig. 5 of GB'97012, except that is step s3", the response to the context request query involves sending context information comprising (1) the service identification, identifying the print service which will do the print operation, and (2) the device identification, identifying the device which will do the print operation. Also, step s13' in this case differs as described in further detail below with reference to Fig. 7.

### 2.2 PDA → PDA

Figure 6 is a schematic flow chart of the steps in exchanging a taken (between the PDAs of users A and B), in accordance with an embodiment of the invention. Initially (step s1) an input is received from user A, requesting the transmission of a token. This request may be input by user A via the user interface of the PDA by means of button presses, selection from pull down menus, and/or dragging and dropping of icons, as is well known in the art (see, e.g. EP '619).

In response to the user request, the PDA of user A (hereafter PDA A) transmits (step s2) a query (by wireless, and preferably IR, signals) for the context of user A, i.e. for the identification of the users (here: B) of those PDAs which are in range of communication. Next, the PDA of user B (hereafter PDA B) receives the context request query and prepares a response (step s3"'): the response includes suitable context information ― "Beam-to Service", indicating that it is prepared to perform the service of receiving a token beamed to it. Once compiled in suitable form, the "Service available" reply is sent (step s4"') by PDA B. This amounts to saying that it is OK to send the token from user A's PDA to that of user B. When sending this reply, PDA B can provide a user identity or cryptographic key (public) associated with the "Service Available" information.

Once the "Service Available" indication is received by PDA A, (unlike GB'97012, in which user A is prompted to make a further selection (step s5) via the user interface of PDA A, corresponding to the action "Beam Token to User B" - see EP '619)), at step s6, the necessary components (see Fig. 3) are assembled and the token (30, 40) constructed. This is followed by the wireless transmission of the token (i.e. as an IR data packet) (step s7) from PDA A to PDA B. Once received (step s8) at PDA B, the newly-arrived token is stored in PDA B (step s9) in the conventional manner, and this may be with or without further intervention by user B to place (an icon for) the newly-received token in an appropriate directory.

In an alternative (Fig. 6(b)), the process may include the initial step (s0) of PDA B, by way of context information-announcing (broadcasting) its identity.

### 2.3 Analysing tokens

Figure 7 shows in detail the substeps involved in the Analyse Token step (s13') in Fig. 5. Initially, the print service is invoked (step s131), by virtue of the Service Identifier parameter 36 (Fig. 3 of GB'97012) designating a print request. Then, the Service Parameters 38 (Fig. 3 of GB'97012) are examined (step s132); for example, the printing device which is to perform the print (service) may have been specified by user (and included as a parameter) prior to transmitting the token, or may have been added (step S10; Fig. 5 of GB'97012) based on context/location parameters 386 (Fig. 3(a) of GB'97012). The token may include further service parameters, as discussed in Section 2 of GB'97012.

In this case, step s132 comprises the step (s1321) of examining the token context information (see Fig. 3 of GB'97012), so as to find the specific print service required.

This enables the exact print service required (e.g. printer id, number of copies, 2-sided, etc.) to be deduced (step s133).

Once this has been done, the document to be printed is requested (step s134), and the document token sent to the file server (see Fig. 5). Then, the capabilities of the chosen printer are examined (step s135): this may show that the printer can only print with a certain paper size, with only certain fonts, or only documents in PostScript® format, for example. In this way, the conversion techniques which need to be performed on the document data received from the file server (52; Fig. 5) can be determined (step s136). Then, once the document data are sent (s17) to the workstation 50 (Fig. 5), the necessary conversion can be carried out (step s18) prior to despatch of the document to the chosen printer.

### 3. Variants

From the foregoing, numerous alternatives and variants will be apparent to persons skilled in the art, as described in the following.

### (a) User interface (Ul) dialogues

For example, the user interface (Ul) dialogues of Fig. 3 may be modified to implement the following interaction dialogues.
(1) "Ask & "Do it""
   - user goes up to a Device, and ask for service, gets back an icon or text which describes service/device (matches user interaction in Figures of GB'97012)
   - pressing "Do it" (button) initiates action with displayed document or document that was last selected.
(2) "Drag & Drop"
   - Device/Service/person Icon pops up automatically as user gets close to it.
   - User drops document icon on it (see UI dialogue diagrams of EP'619).
(3) "See & "Do it""
   - Device/Service Icon pops up automatically as user gets close to it.
   - Press "Do it" after icon has popped up
   - see Ul diagrams of Fig. 3; with the top left hand corner device/service/person icon
(4) "Just "Do it""
   - Ul diagrams of Fig. 3 but WITHOUT the top left hand corner device/service/person icon
   - press "Do it" when near the device (experience only tells user when he's near enough!)

### (b) Transaction Protocol Methods

The above four dialogues can ALL be supported by either of the 2 underlying transaction protocol methods described earlier - one simple addition is needed: an optional initial "announcement message" from the device/service/person indicating it's basic identity (see Fig. 3(b), wherein an extra initial step "Send: announce identity" is included). This initial step may also further be included in the processes illustrated in Figs 4 and 5.

This "announce" send is optional: dialogues 1 and 4 do not need it, but dialogues 2 and 3 do need it. Dialogues 1 and 4 do not need it, but they can use it as an alternative to the "query" send - for example the user does an Ask in the "Ask & "Do it"", and then the device/service/person icon or text is immediately displayed because it was received by the PDA*before* the user asked for it. In this case a "query" send is not needed, hence it too is optional depending on how each dialogue is implemented.

## Claims

1. A method carried out in a data processing device including a processor, memory, a user interface and means providing two way wireless communication with one or more other devices, including a target device, comprising:
(a) in response to a first user input defining a context request, transmitting a query, the query requesting which service(s) can be performed by the target device,
(b) receiving a response from the target device, the response incorporating a target device identifier identifying the target device, and at least one component comprising a service identifier identifying the service requested in step (a),
(c) determining whether the response received in step (b) is positive,
(d) if the response is positive, assembling a token from a plurality of token components, each token component defining a document related entity and a property of the entity, at least one component comprising the target device identifier, and at least one component comprising the service identifier.

2. A method carried out in a data processing device including a processor, memory, and a user interface, comprising:
(d) receiving a first user input designating a graphical object corresponding to a document, the document being associated with a stored token, the token having a plurality of token components, each token component defining a document related entity and a property of the entity, at least one component comprising a target device identifier identifying the target device, and at least one component comprising a service identifier identifying a service selected by the user.
(e) receiving a second user input indicating that the token is to be sent to another data processing device,
(f) encoding the token in a data packet, and
(g) transmitting the data packet.

3. A method carried out in a data processing device including a processor, memory, and a user interface, comprising:
(h) receiving a data packet,
(i) decoding the data packet to derive a token, the token from a plurality of token components, each token component defining a document related entity and a property of the entity, at least one component comprising a target device identifier identifying the target device, and at least one component comprising a service identifier identifying a service,
(j) storing the token derived in step (i).

4. A method carried out in a data processing device including a processor, memory, and a user interface and means providing two-way wireless communications with one or more portable devices, the data processing device being couple in a network to one or more other data processing devices, at least one of the data processing devices including means for storing a repository of electronic documents, comprising:
(h) receiving a data packet,
(i) decoding the data packet to derive a token, the token having a plurality of token components, each token component defining a document related entity and a property of the entity, at least one token component comprising a request for a document related service,
(j) assembling a service token from token derived in step (i), at least one component comprising a target device identifier identifying the target device, and at least one component comprising a service identifier identifying a service, said target device identifier and said service identifier being dependent upon the location of said data processing device,
(k) sending the service token to one of said other data processing devices via the network.

5. A method carried out in a data processing device including a processor, memory, and a user interface and means providing two-way wireless communications with one or more portable devices, the data processing device being couple in a network to one or more other data processing devices, at least one of the data processing devices including means for storing a repository of electronic documents, comprising:
(h) receiving a data packet,
(i) decoding the data packet to derive a token, the token having a plurality of token components, each token component defining a document related entity and a property of the entity, at least one token component comprising a request for a document related service, and at least one component comprising a target device identifier identifying the target device, and at least one component comprising a service identifier identifying a service, said target device identifier and said service identifier being dependent upon the location of said data processing device,
(j) assembling a service token from token derived in step (i),
(k) sending the service token to one of said other data processing devices via the network.

6. A method carried out in a data processing device including a processor, memory, and a user interface the data processing device being couple in a network to one or more other data processing devices, at least one of the data processing devices including means for storing a repository of electronic documents, comprising:
(k) receiving a service token, the token from a plurality of token components, each token component defining a document related entity and a property of the entity, at least one component comprising a target device identifier identifying the target device, and at least one component comprising a service identifier identifying the service requested by the user,
(I) decoding the token to determine therefrom one or more document references, the or each document reference corresponding to a document within said repository and specified by one of said token components, and
(m) sending a request to said one of the data processing devices storing the repository of documents, for retrieval of the or each document corresponding to the or each document reference.

7. A data processing device when suitably programmed for carrying out the method of any of the preceding claims, the device comprising a processor, a memory, and a user interface.

8. A data processing device comprising:
a processor,
a memory coupled to the processor, and
a user interface coupled to the processor and to the memory and adapted to be operable by a user to generate user inputs,
means providing two-way wireless communications between the device and one or more other devices, including
means for receiving at least one user input, the user input(s) defining a token, the token comprising a plurality of token components, each token component defining a document related entity and a property of the entity, at least one component comprising a target device identifier identifying the target device, and at least one component comprising a service identifier identifying the service requested by the user.

9. A system for accessing or distributing electronic documents, including: a repository of electronic documents, each document having a corresponding document reference, and a plurality of objects, at least one of said objects being portable or mobile, each object including means for communicating with the or each other object and with a user interface, and means for receiving, storing and/or transmitting a token, the token comprising a plurality of token components, each token component defining a document related entity and a property of the entity, at least one component comprising a target device identifier identifying the target device, and at least one component comprising a service identifier identifying the service requested by the user.

10. A portable device for accessing or distributing electronic documents, including: means for communicating with fixed or mobile electronic devices and with a user interface, at least one of said devices including means storing a repository of electronic documents, each document having a corresponding document reference, and means for receiving, storing and/or transmitting a token, the token comprising a plurality of token components, each token component defining a document related entity and a property of the entity, at least one component comprising a target device identifier identifying the target device, and at least one component comprising a service identifier identifying the service requested by the user.

11. An apparatus for scanning, copying and/or printing documents, including: means for accessing a repository of electronic documents, each electronic document having a corresponding document reference, means for communicating with one or more of a plurality of objects, at least one of said objects being portable or mobile, and with a user interface, and means for receiving, storing and/or transmitting a token, the token comprising a plurality of token components, each token component defining a document related entity and a property of the entity, at least one component comprising a target device identifier identifying the target device, and at least one component comprising a service identifier identifying the service requested by the user.
